# FASCICULE DE BREVET EUROPEEN

(11) **EP 1 843 059 B1**
(45) Date de publication et mention de la délivrance du brevet: **25.02.2009**
(21) Numéro de dépôt: 07300921.9
(22) Date de dépôt: 04.04.2007
(51) Int. Cl.: F16F 1/373, F16F 3/087, A47C 23/04

(54) **Organe élastique de suspension en matière plastique de type ressort, rotule ou similaire pour sommier, matelas ou siège**
Elastisches Federungsorgan aus Plastik vom Typ Sprungfeder, Kugel oder Ähnlichem für Gitterrost, Matratze oder Stuhl
Flexible plastic suspension element such as a spring, ball-and-socket joint or similar for bed base, mattress or chair

(30) Priorité: 05.04.2006 FR 0602971
(43) Date de publication de la demande: 10.10.2007
(73) Titulaire: DELAHOUSSE ET FILS, F-49320 Vauchretien (FR)
(72) Inventeur: Delahousse, Marc, 49000 Angers (FR); Gregoire, Olivier, 49320 Coutures (FR)
(74) Mandataire: Michelet, Alain

(56) Documents cités:
- GB-A- 2 055 173
- US-A- 2 433 012
- US-A- 5 558 314
- US-A- 5 947 453

## Description

La présente invention concerne un organe élastique de suspension en matière plastique, de type ressort, rotule ou similaire, pour sommier, matelas ou siège.

Il existe de très nombreuses variantes d'organes élastiques de suspension en matière plastique utilisés à titre de ressorts au sein d'une structure de matelas ou de siège, ou encore à titre de rotule pour des sommiers à lattes ou multi-éléments. A titre indicatif, une structure connue de tels organes de suspension, constituée d'un assemblage de vés de suspension, est décrite dans le document US-2 433 012.

Cependant, les organes élastiques actuels n'offrent pas, pour certains, des caractéristiques de suspension optimales, ou alors pour d'autres présentent des structures relativement complexes, par exemple assemblage de plusieurs pièces (embase, élément de suspension, plateau ...) ou pièce monobloc nécessitant des outillages complexes, coûteux et peu productifs.

La présente invention propose de remédier à ces inconvénients en présentant une structure simple à produire par une technique de moulage, et disposant d'une grande course de suspension.

Pour cela, l'organe élastique de suspension conforme à la présente invention comporte une embase et une tête entre lesquelles est interposé un élément élastique de suspension, cet élément élastique de suspension étant constitué d'au moins deux structures élastiques identiques, formées chacune d'au moins deux bras rectilignes ou sensiblement rectilignes juxtaposés, raccordés deux à deux par une articulation pour former un ou plusieurs Vé(s) de suspension actifs chacun selon un plan de suspension perpendiculaire à ladite articulation, lesquels plans de suspension sont parallèles ; de plus, lesdites structures élastiques s'étendent dans des plans de suspension non confondus, et elles sont écartées l'une de l'autre par rapport à un axe parallèle auxdits plans de suspension, lesdites structures élastiques étant en outre disposées en opposition l'une de l'autre, décalées de 180°.

De préférence, les structures élastiques sont constituées de lames plates qui s'étendent dans un plan perpendiculaire au plan de suspension, raccordées deux à deux par une articulation qui s'étend également perpendiculairement audit plan de suspension.

Selon une autre particularité, les axes de suspension des structures élastiques sont tous disposés dans un même plan perpendiculaire au plan de suspension de chacune d'elles.

Selon une forme de réalisation particulièrement intéressante, les structures élastiques de l'élément de suspension comportent chacune au moins trois bras juxtaposés. En outre, deux desdites structures élastiques sont avantageusement reliées ensemble au niveau de la partie centrale de l'un au moins de leurs bras, par un organe de liaison. De préférence, ces structures juxtaposées sont reliées ensemble par un organe de liaison au niveau de la partie centrale de l'un au moins de leurs bras qui ne sont pas reliés directement ni à la tête ni à l'embase. Dans une forme de réalisation particulière, tous les bras qui ne sont reliés directement ni à la tête ni à l'embase comportent un tel organe de liaison.

Selon une forme de réalisation préférée, le ou les organes qui relient les deux structures élastiques de l'élément de suspension sont réalisés monobloc avec les bras des structures élastiques.

Selon une forme de réalisation particulière, l'organe de suspension comporte un élément élastique de suspension constitué d'au moins deux couples de structures élastiques.
Dans ce cas, les différents couples de structures élastiques peuvent être reliés entre eux par un ou plusieurs éléments de liaison qui prolongent le ou les organes de liaison des deux structures élastiques de chacun desdits couples.

De préférence, les différentes parties de l'organe de suspension, à savoir tête, embase et élément de suspension, sont réalisées monobloc par moulage de matière thermoplastique du type élastomère.

Mais l'invention sera encore illustrée, sans être aucunement limitée, par la description suivante de plusieurs formes de réalisation particulières, données uniquement à titre d'exemples et représentées sur les dessins annexés dans lesquels :
- la figure 1 est une vue schématique, de côté, d'une première forme de réalisation possible de l'organe élastique de suspension conforme à l'invention, représenté ici à l'état stable ;
- la figure 2 montre l'organe élastique de la figure 1, ici illustré sous forme partiellement comprimée ;
- la figure 3 est une vue de face de l'organe élastique illustré sur la figure 1 ;
- les figures 4 et 5 sont des vues en perspective, sous deux angles différents, d'une seconde forme de réalisation possible de l'organe élastique conforme à l'invention ;
- la figure 6 est une vue de face de l'organe élastique des figures 4 et 5 ;
- la figure 7 est une vue en coupe selon VII-VII de la figure 6 ;
- la figure 8 est une vue de côté de l'organe élastique des figures 4 à 7 ;
- la figure 9 montre l'organe élastique des figures 4 à 8, vu par-dessus ;
- la figure 10 est une vue schématique, de côté, d'une troisième forme de réalisation possible de l'invention.

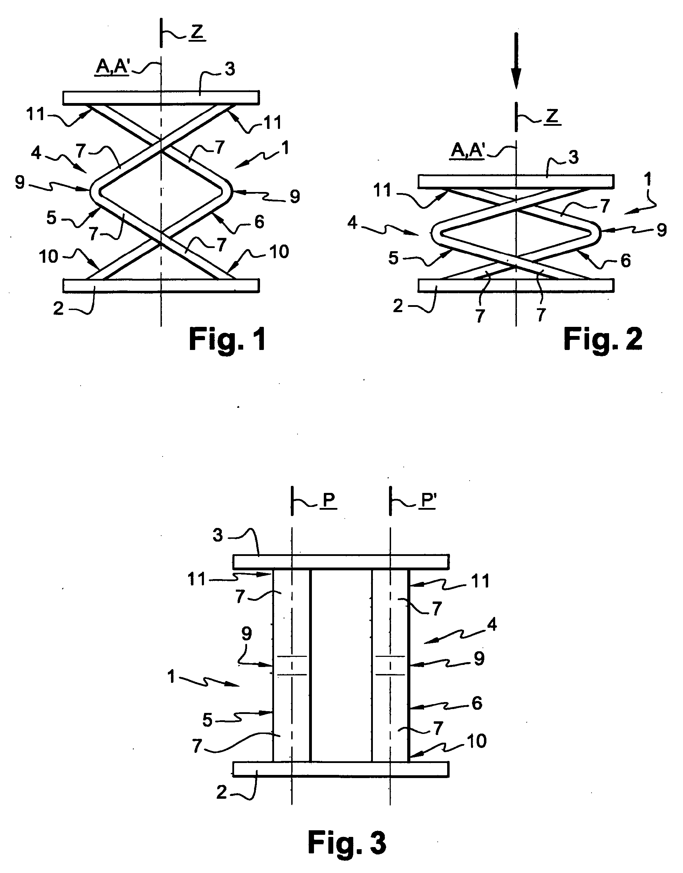

Tel qu'illustré sur les figures 1 à 3, l'organe élastique 1 est en forme de ressort constitué d'une embase 2 et d'une tête 3 entre lesquelles est interposé un élément élastique de suspension 4. Cet élément élastique de suspension 4 est adapté pour tendre à écarter la tête 3 de l'embase 2 lorsque ces deux éléments ont été rapprochés par compression (figure 2), et pour tendre alors à retrouver la position stable illustrée sur les figures 1 et 3.

L'élément de suspension 4 est constitué de deux structures élastiques identiques 5 et 6 formées chacune de deux bras rectilignes 7 raccordés entre eux au niveau de l'une de leurs extrémités par une charnière d'articulation 9, pour former un Vé de suspension.
L'autre extrémité des bras 7 est raccordée respectivement à l'embase 2 et à la tête 3 par une charnière d'articulation 10 et 11.

Le Vé de suspension de chaque structure 5, 6 s'étend dans un plan de suspension, respectivement P et P' (figure 3) et comporte un axe de suspension, respectivement A et A' (figures 1 et 2).

Sur la figure 3, on remarque que les deux structures 5 et 6 de l'élément de suspension 4 s'étendent à distance l'une de l'autre, ceci dans des plans de suspension P et P' parallèles entre eux et non confondus ; en particulier, les deux structures 5 et 6 sont écartées l'une de l'autre par rapport à un axe parallèle à leur plan de suspension P, P'. En outre, ces deux structures de suspension 5 et 6 sont disposées en opposition, c'est-à-dire qu'elles sont décalées de 180°, comme le montrent les figures 1 et 2.
Ces particularités permettent d'obtenir un ensemble de suspension stable et disposant d'un bon équilibre.

Comme on peut le voir sur les figures 1 et 2, les axes de suspension A et A', respectivement des structures 5 et 6, sont disposés dans un même plan Z perpendiculaire aux plans de suspension P et P'.

Les bras 7 des Vés de suspension se présentent sous la forme de lames plates qui s'étendent dans un plan perpendiculaire aux plans de suspension P et P'. En outre, la charnière d'articulation 9 qui raccorde les deux bras 7 de chaque structure 5 et 6, et les articulations 10 et 11 qui raccordent l'un des bras 7 avec l'embase 2 et l'autre bras 7 avec la tête 3, s'étendent également perpendiculairement aux plans de suspension P et P', et ici en l'occurrence horizontalement.

Les bras 7 ont tous la même longueur ; ainsi, les deux articulations 9 des deux structures 5 et 6 se situent toutes deux dans le plan médian de l'organe de suspension 1, en permanence à égale distance de la tête 3 et de l'embase 2. En vue de côté, figures 1 et 2, les bras 7 en regard des structures de suspension 5 et 6 se croisent au niveau de leur zone centrale, sur ou à proximité immédiate des axes de suspension A et A'.

Les caractéristiques de compressibilité de cet organe de suspension 1 sont essentiellement liées au travail des charnières de raccordement 9, 10 et 11, éventuellement aussi un peu à la flexion des bras 7.

Cet organe de suspension 1 peut être obtenu très simplement, de manière monobloc, par moulage de matière thermoplastique genre élastomère.

Sur les figures 1 à 3, les éléments d'embase 2 et de tête 3 consistent en de simples plateaux. Bien entendu, ils peuvent prendre des formes plus complexes, adaptées à la fonction que l'on cherche à leur faire remplir (simple élément de contact plan, fixation sur un châssis, organe de réception d'une latte ou d'un plateau de suspension ...).

Comme on le verra ci-après, le nombre de bras des structures de suspension peut être supérieur à deux, et l'organe de suspension peut comporter une pluralité d'éléments de suspension identiques ou similaires (et donc une pluralité de couples de structures de suspension).

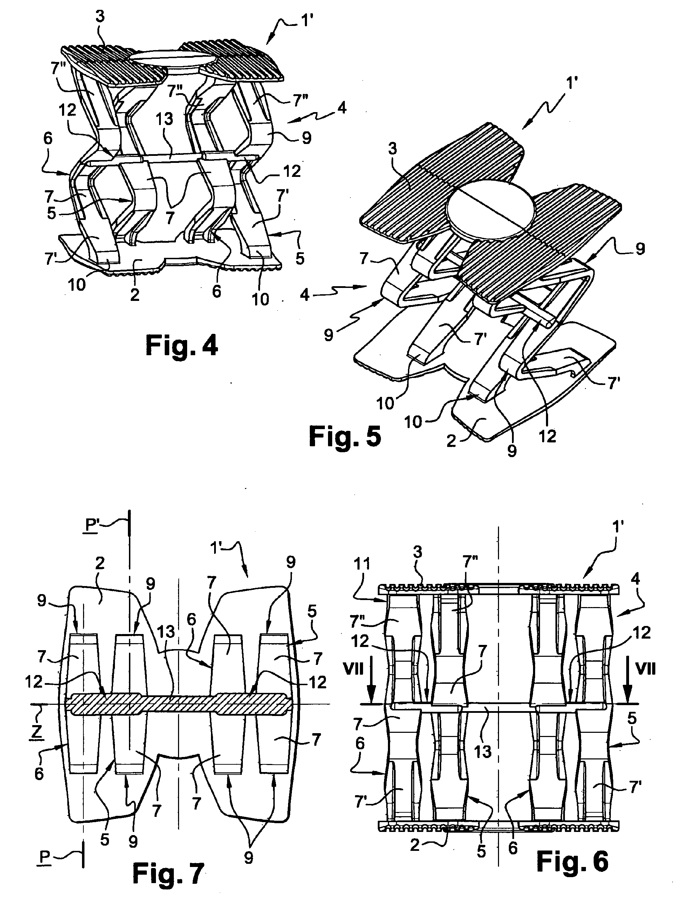

Les figures 4 à 9 illustrent une variante de réalisation d'un organe de suspension 1' conforme à l'invention, dans lequel les éléments d'embase 2 et de tête 3 sont en forme de plateaux, raccordés par un élément de suspension 4 constitué de deux couples de structures de suspension 5, 6 (décalées de 180° entre elles au sein de chaque couple), chacune de ces structures 5, 6 étant formée d'une juxtaposition de trois bras rectilignes 7.

Dans chaque structure de suspension 5, 6 les bras 7 sont raccordés deux à deux par une charnière 9. D'autre part, le bras inférieur 7' est raccordé à l'embase 2 par l'articulation 10 et le bras supérieur 7" est raccordé à la tête 3 par l'articulation 11.

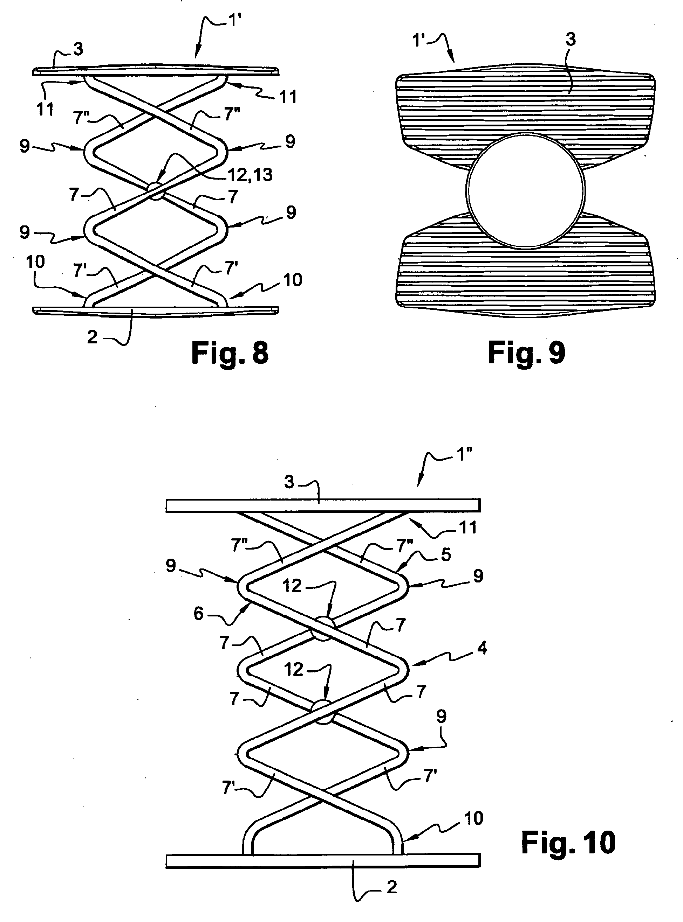

Là encore, vus de côté et en position stable (figure 8) les bras 7 des deux structures 5 et 6 de chaque couple se croisent sensiblement au niveau de leur partie centrale.

Par rapport au mode de réalisation des figures 1 à 3, en plus du nombre de bras, l'organe de suspension 1' se distingue par la présence d'un organe de liaison 12 qui relie les deux structures de suspension 5 et 6 de chaque couple. Cet organe de liaison 12 est en forme de tourillon ou d'axe monobloc qui relie la partie centrale des bras médians 7 (disposés entre les bras d'extrémité 7' et 7").
Pour chaque couple de structures 5, 6, l'organe de liaison 12 a pour effet d'améliorer la stabilité de la suspension ; il améliore également la rigidité de la structure.

Au sein de chaque couple de structures 5, 6 les organes de liaison 12 travaillent en torsion lors des mouvements de l'organe de suspension 1'.

Pour conserver des caractéristiques de compressibilité optimales, aucun organe de liaison 12 n'est prévu pour solidariser ensemble les deux bras en regard 7' et les deux bras en regard 7" qui sont reliés directement d'une part à l'embase 2 et d'autre part à la tête 3.

Encore pour améliorer la rigidité de l'organe de suspension 1', un élément de liaison 13 relie les deux couples de structures de suspension 5, 6. Cet élément de liaison 13 est en forme de tourillon ou d'axe monobloc qui prolonge les deux organes de liaison 12 précités.

Comme les deux structures 5 et 6 reliées par l'élément 13 sont orientées dans le même sens (c'est-à-dire qu'elles ne sont pas décalées de 180°), cet élément 13 ne subit pratiquement pas de déformation lors des mouvements de compression et d'extension de l'organe de suspension.

Les organes de liaison 12 et l'élément de liaison 13 se situent en permanence dans le plan Z des axes de suspension de chaque structure 5, 6, lequel plan Z s'étend perpendiculairement aux plans de suspension P, P' de chacune desdites structures 5, 6.

Dans une variante de réalisation, les organes de liaison 12 pourront être présents sans l'élément de liaison 13.

Dans le mode de réalisation des figures 4 à 9, on remarque que les surfaces externes des plateaux d'embase 2 et de tête 3 comportent des zones nervurées pour limiter les possibilités de glissement des surfaces destinées à venir en contact.

La figure 10 illustre de manière schématique encore une autre variante d'un organe élastique 1" conforme à l'invention, dans lequel les structures de suspension 5 et 6 sont constituées d'une juxtaposition de quatre bras 7.
Ici, les deux couples de bras 7 en regard qui ne sont pas directement reliés à l'embase 2 ou à la tête 3, sont reliés ensemble par un organe de liaison 12. Dans le cas où l'élément de suspension 4 est constitué de plusieurs couples de structures 5, 6, deux couples juxtaposés peuvent également être munis d'un élément de liaison (d'une manière similaire au mode de réalisation précédent), prolongeant lesdits organes de liaison 12.

D'une manière générale, le nombre de bras 7 des structures de suspension 5, 6 n'est pas limité. Il sera fonction des caractéristiques de compressibilité recherchées, et des caractéristiques dimensionnelles du site à équiper. D'autre part, le nombre de structures de suspension sera également adapté aux caractéristiques de compressibilité recherchées. Ce nombre pourra être impair mais on utilisera de préférence des couples de structures. Ces couples de structures pourront être identiques entre eux, simplement juxtaposés ; ils pourront aussi être juxtaposés de manière inversée tel que prévu dans le mode de réalisation des figures 4 à 9.

L'organe élastique de suspension illustré sur les figures 1 à 10 consiste en un organe ressort destiné à être inséré au sein de la structure d'un matelas ou d'un siège. Dans des variantes de réalisation, l'embase et la tête de cet organe de suspension peuvent être adaptés pour constituer une rotule de suspension pour latte(s) de sommier, une structure de suspension pour le plateau d'un sommier de type multi-éléments, ou encore un système de variation de fermeté pour latte(s) de sommier.

## Revendications

1. Organe élastique de suspension en matière plastique, de type ressort, rotule ou similaire, pour sommier, matelas ou siège, lequel organe élastique (1, 1', 1") comprend une embase (2) et une tête (3) entre lesquelles est interposé un élément élastique de suspension (4), ledit élément élastique de suspension (4) étant constitué d'au moins deux structures élastiques identiques (5, 6), formées chacune d'au moins deux bras (7) rectilignes ou sensiblement rectilignes juxtaposés, raccordés deux à deux par une articulation (9) pour former un ou plusieurs Vé (s) de suspension actifs chacun selon un plan de suspension (P, P') perpendiculaire à ladite articulation (9), lesquels plans de suspension (P, P') sont parallèles entre eux, **caractérisé en ce que** lesdites structures élastiques (5, 6) s'étendent dans des plans de suspension (P, P') non confondus et sont écartées l'une de l'autre par rapport à un axe parallèle auxdits plans de suspension (P, P'), lesdites structures élastiques (5, 6) étant en outre disposées en opposition l'une de l'autre, décalées de 180°.

2. Organe élastique de suspension selon la revendication 1, **caractérisé en ce que** les bras (7) des structures élastiques (5, 6) sont constitués de lames plates qui s'étendent dans un plan perpendiculaire aux plans de suspension (P, P'), raccordées deux à deux par une articulation (9) qui s'étend également perpendiculairement auxdits plans de suspension (P, P').

3. Organe élastique de suspension selon l'une quelconque des revendications 1 ou 2, **caractérisé en ce que** les axes de suspension (A, A') des structures élastiques (5, 6), sont tous disposés dans un même plan (Z) perpendiculaire aux plans de suspension (P, P') de chacune d'elles.

4. Organe élastique de suspension selon l'une quelconque des revendications 1 à 3, **caractérisé en ce que** les structures élastiques (5, 6) de l'élément de suspension (4) comportent chacune au moins trois bras juxtaposés (7), au moins deux desdites structures élastiques (5, 6) étant reliées ensemble au niveau de la partie centrale de l'un au moins de leurs bras (7), par un organe de liaison (12).

5. Organe élastique de suspension selon la revendication 4, **caractérisé en ce que** les deux structures juxtaposées (5, 6) sont reliées ensemble par un organe de liaison (12) au niveau de la partie centrale de l'un au moins de leurs bras (7) qui ne sont pas reliés directement ni à la tête (3) ni à l'embase (2).

6. Organe élastique de suspension selon la revendication 5, **caractérisé en ce que** les deux structures juxtaposées (5, 6) de l'élément de suspension (4) sont reliées ensemble par un organe de liaison (12) au niveau de la partie centrale de tous leurs bras (7) qui ne sont pas reliés directement ni à la tête (3) ni à l'embase (2).

7. Organe élastique de suspension selon l'une quelconque des revendications 4 à 6, **caractérisé en ce que** le ou les organes de liaison (12) sont réalisés monoblocs avec les bras (7) des structures élastiques (5, 6).

8. Organe élastique de suspension selon l'une quelconque des revendications 1 à 7, **caractérisé en ce qu'**il comporte un élément élastique de suspension (4) constitué d'au moins deux couples de structures élastiques (5, 6).

9. Organe élastique de suspension selon la revendication 8, **caractérisé en ce que** les différents couples de structures élastiques (5, 6) sont reliés entre eux par un ou plusieurs éléments de liaison (13) prolongeant le ou les organes de liaison (12) des deux structures élastiques (5, 6) de chacun desdits couples.

10. Organe élastique de suspension selon l'une quelconque des revendications 1 à 9, **caractérisé en ce que** ses différentes parties, à savoir tête (3), embase (2) et élément de suspension (4), sont réalisées monobloc par moulage de matière thermoplastique du type élastomère.

## Claims

1. A flexible plastic suspension member, such as a spring, ball-and-socket joint or similar, for bed base, mattress or chair, which flexible member (1, 1', 1") comprises a mount (2) and a head (3) between which a flexible suspension element (4) is interposed, said flexible suspension element (4) being formed of at least two identical flexible structures (5, 6), each consisting of at least two juxtaposed rectilinear or substantially rectilinear arms (7), connected two by two by a joint (9) to form one or several active suspension V(s) each along a suspension plane (P, P') perpendicular to said joint (9), which suspension planes (P, P') are parallel to one another, **characterised in that** said flexible structures (5, 6) extend into nonoverlapping suspension planes (P, P') and are spaced apart from one another relative to an axis parallel to said suspension planes (P, P'), said flexible structures (5, 6) being moreover arranged opposite one another, offset by 180°.

2. A suspension flexible member according to claim 1, **characterised in that** the arms (7) of the flexible structures (5, 6) consist of flat blades extending on a plane perpendicular to the suspension planes (P, P'), connected two by two by a joint (9) also extending perpendicular to said suspension planes (P, P').

3. A suspension flexible member according to any of the claims 1 or 2, **characterised in that** the suspension axes (A, A') of the flexible structures (5, 6) are all arranged on the same plane (Z) perpendicular to the suspension planes (P, P') of each of them.

4. A suspension flexible member according to any of the claims 1 to 3, **characterised in that** the flexible structures (5, 6) of the suspension element (4) each comprise at least three juxtaposed arms (7), at least two of said flexible structures (5, 6) being connected together at the central portion of one at least of their arms (7), by a linking member (12).

5. A suspension flexible member according to claim 4, **characterised in that** both juxtaposed structures (5, 6) are connected together by a linking member (12) at the central portion of one at least of their arms (7) which are not directly connected to the head (3) nor to the mount (2).

6. A suspension flexible member according to claim 5, **characterised in that** both juxtaposed structures (5, 6) of the suspension element (4) are connected together by a linking member (12) at the central portion of all their arms (7) which are not directly connected to the head (3) nor to the mount (2).

7. A suspension flexible member according to any of the claims 4 to 6, **characterised in that** the linking member(s) (12) are provided integral with the arms (7) of the flexible structures (5, 6).

8. A suspension flexible member according to any of the claims 1 to 7, **characterised in that** it includes a flexible suspension element (4) formed of at least two pairs of flexible structures (5, 6).

9. A suspension flexible member according to claim 8, **characterised in that** the different pairs of flexible structures (5, 6) are connected to one another by one or several linking elements (13) extending the linking member(s) (12) of both flexible structures (5, 6) of each of said pairs.

10. A suspension flexible member according to any of the claims 1 to 9, **characterised in that** its different portions, i.e. head (3), mount (2) and suspension element (4), are made as mono-blocks by moulding elastomer-type thermoplastic material.

## Patentansprüche

1. Elastisches Aufhängeorgan aus Kunststoff des Typs Feder, Gelenk oder Ähnliches; für Lattenrost, Matratze oder Sitz, wobei das elastische Organ (1, 1', 1") eine Basis (2) und einen Kopf (3) aufweist, zwischen welchen ein elastisches Aufhängeelement (4) eingefügt ist, wobei das elastische Äufhängeelement (4) aus mindestens zwei identischen elastischen Strukturen (5, 6) besteht, die jeweils aus mindestens zwei geradlinigen oder im Wesentlichen geradlinigen nebeneinander liegenden Armen (7) gebildet sind, die in Paaren durch ein Gelenk (9) verbunden sind, um ein oder mehrere Aufhängungs-Vs zu bilden, die jeweils gemäß einer Aufhängeebene (P, P') senkrecht zu dem Gelenk (9) aktiv sind, wobei die Aufhängeebenen (P, P') zueinander parallel liegen, **dadurch gekennzeichnet, dass** sich die elastischen Strukturen (5, 6) in Aufshängeebenen (P, P') verstrecken, die nicht zusammenfallen und voneinander in Bezug zu einer parallelen Achse, die zu den Aufhängeebenen (P, P') parallel ist, beabstandet sind, wobei die elastischen Strukturen (5, 6) ferner einander entgegen gesetzt um 180° versetzt angeordnet sind.

2. Elastisches Äufhängeorgan nach Anspruch 1, **dadurch gekennzeichnet, dass** die Arme (7) der elastischen Strukturen (5, 6) aus flachen Klingen bestehen, die sich in einer Ebene senkrecht zu den Aufhängeebenen. (P, P') erstrecken, die in Paaren durch ein Gelenk (9) angeschlossen, sind, das sich im Allgemeinen senkrecht zu den Aufhängeebenen (P, P') erstreckt.

3. Elastisches Aufhängeorgan nach einem der Ansprüche 1 oder 2, **dadurch gekennzeichnet, dass** die Aufhängeachsen (A, A') der elastischen Strukturen (5, 6) alle in einer gleichen Ebene (Z) senkrecht du den Aufhängeebenen (P, P') jeder von ihnen angeordnet sind.

4. Elastisches Aufhängeorgan nach einem der Ansprüche 1 bis 3, **dadurch gekennzeichnet, dass** die elastischen Strukturen (5, 6) des Aufhängeelements (4) jeweils mindestens drei nebeneinander liegende Arme (7) aufweisen, wobei mindestens zwei der elastischen Strukturen (5, 6) gemeinsam auf dem Niveau des zentralen Teils mindestens eines ihrer Arme (7) durch ein Verbindungsorgan (12) verbunden sind.

5. Elastisches Aufhängeorgan nach Anspruch 4, **dadurch gekennzeichnet, dass** die zwei nebeneinander liegenden Strukturen (5, 6) gemeinsam durch ein Verbindungsorgan (12) auf dem Niveau des zentralen Teils mindestens eines ihrer Arme (7), die weder mit dem Kopf (3) noch mit dem Sockel (2) direkt verbunden sind, verbunden sind.

6. Elastisches Aufhängeorgan nach Anspruch 5, **dadurch gekennzeichnet, dass** die zwei nebeneinander liegenden Strukturen (5, 6) des Aufhängeelements (4) miteinander durch ein Verbindungsorgan (12) auf dem Niveau des zentralen Teils aller ihrer Arme (7), die weder mit dem Kopf (3) noch mit dem Sockel (2) direkt verbunden sind, verbunden sind.

7. Elastisches Aufhängeorgan nach einem der Ansprüche 4 bis 6, **dadurch gekennzeichnet, dass** das oder die Verbindungsorgane (12) aus einem Stück mit den Armen (7) der elastischen Strukturen (5, 6) hergestellt sind.

8. Elastisches Aufhängeörgan nach einem der Ansprüche 1 bis 7, **dadurch gekennzeichnet, dass** es ein elastisches Aufhängeelement (4) aufweist, das aus mindestens zwei Paaren elastischer Strukturen (5, 6) besteht.

9. Elastisches Aufhängeorgan nach Anspruch 8, **dadurch gekennzeichnet, dass** die verschiedenen Paare elastischer Strukturen (5, 6) untereinander durch ein oder mehrere Verbindungselemente (13) verbunden sind, die das oder die Verbindungsorgane (12) der zwei elastischen Strukturen (5, 6) jedes der Paare verlängern.

10. Elastisches Aufhängeorgan nach einem der Ansprüche 1 bis 9, **dadurch gekennzeichnet, dass** seine verschiedenen Teile, nämlich der Kopf (3), der Sockel (2) und das Aufhängeelement (4) aus einem Stück durch Formen von Thermoplastwerkstoff des Typs Elastomer hergestellt sind.
